(19) Europäisches Patentamt
European Patent Office
Office européen des brevets

(11) **EP 3 237 778 B1**

(12) **EUROPÄISCHE PATENTSCHRIFT**

(45) Veröffentlichungstag und Bekanntmachung des Hinweises auf die Patenterteilung:
**03.10.2018** **Patentblatt 2018/40**

(21) Anmeldenummer: **15816728.8**

(22) Anmeldetag: **16.12.2015**

(51) Int Cl.:
*F16H 7/06* *(2006.01)*  *F16H 7/08* *(2006.01)*

(86) Internationale Anmeldenummer:
**PCT/EP2015/079939**

(87) Internationale Veröffentlichungsnummer:
**WO 2016/102262 (30.06.2016 Gazette 2016/26)**

(54) **VERFAHREN ZUM BETREIBEN EINES KETTENTRIEBS UND ANORDNUNG MIT EINEM KETTENTRIEB**

METHOD FOR OPERATING A CHAIN DRIVE AND ASSEMBLY HAVING A CHAIN DRIVE

PROCÉDÉ DE FONCTIONNEMENT D'UN ENTRAÎNEMENT À CHAÎNE ET DISPOSITIF AVEC UN ENTRAÎNEMENT À CHAÎNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014  DE 102014226906**

(43) Veröffentlichungstag der Anmeldung:
**01.11.2017  Patentblatt 2017/44**

(73) Patentinhaber: **Voith Patent GmbH**
**89522 Heidenheim (DE)**

(72) Erfinder: **ZIEGLER, Manfred**
**50374 Erftstadt (DE)**

(56) Entgegenhaltungen:
**EP-A1- 1 524 454    WO-A1-02/40892**
**WO-A2-03/036133**

**Beschreibung**

Die Erfindung betrifft ein Verfahren zum Betreiben eines Kettentriebs und eine Anordnung mit einem Kettentrieb und einer Steuereinrichtung zum Durchführen des Verfahrens.

An endlosen Kettentrieben, wie sie z.B. im untertägigen Steinkohlebergbau in Kettenkratzerförderern, auch bezeichnet als Panzerförderer, AFC (Armoured Face Conveyor) oder Streckenförderer (engl.: Stageloader) und Hobelanlagen eingesetzt werden, ist eine korrekte Wahl einer Kettenvorspannung entscheidend für eine Betriebssicherheit und Lebensdauer von Anlagen. Bekannt ist dabei auch der Einsatz von Antrieben mit hydrodynamischer Kupplung.

Ist eine Kettenspannung einer Kette eines Kettentriebs zu gering, kommt es hinter den Antrieben der Kette zu Hängkettenbildung und - vor allem im Untertrum, d.h. der unteren rücklaufenden Seite des Kettentriebs - zum Verklanken der Kette mit Blockade des Kettenstrangs und zu einem nachfolgendem Kettenriss.

Ist die Kettenspannung zu hoch, kommt es zu erhöhtem Verschleiß von Kettenrad bzw. -stern und Kette und - bei nicht geeigneter, insbesondere nicht optimaler Ausrichtung der Kettenführung - zu zusätzlichen Zwangskräften mit erhöhtem Leistungsbedarf und Verschleiß der Kettenführung. Eine Abweichung von einer idealen Ausrichtung der Kettenführung entsteht z.B. bei horizontaler und vertikaler Abwinklung einzelner Rinnen eines Strebförderers, um einem Flözverlauf zu folgen.

Idealerweise ist die Kette so gespannt, dass die Kette vor dem Einlauf ins Untertrum noch eine Vorspannung besitzt, die bei kurzfristig auftretenden Lastspitzen unzulässig hohen Kettendurchhang vermeidet. An dem zweiten Kettenstern, hinter dem die Kette ins Obertrum einläuft, sollte hingegen die Kette eine geringe Lose aufweisen. Aus diesen Forderungen ergeben sich Vorgaben für die Kettenvorspannung und die Lastaufteilung zwischen Haupt- und Hilfsantrieb.

Bei Strebförderanlagen ändert sich die Lage eines Strebförderers bei jedem Rückvorgang. Um unvorhergesehene Stillstände durch Kettenbrüche zu vermeiden, wird die Kette meist höher gespannt als erforderlich, um nicht ständig die Kettenspannung anpassen zu müssen. Der erhöhte Verschleiß und Energieverbrauch werden hierbei billigend in Kauf genommen.

Hobelanlagen haben meist keine Spanneinrichtung. Die Kettenspannung wird manuell aufgebracht durch einseitige Fixierung der Kette und Aufbringung der Vorspannung mittels Hydraulik oder Nutzung der Antriebe und anschließendem Einkürzen der Kette um lose Glieder. Bei Strebförderern und Streckenförderern werden häufig hydraulische Spannrinnen verwendet mit manuell vorgegebenem Druck. Durch interne und externe Reibung - z.B. Blockade des Spannwegs durch Kohleklein - ist dieses Verfahren sehr ungenau.

Auch gibt es Ansätze durch Dehnmessstreifen am Maschinenrahmen, in dem der Kettenstern gelagert ist, die Achslast zu messen. Für Streckenförderer gibt es ein System zur Hängkettenmessung, das den Kettendurchhang mittels Magnetfeldsensoren misst.

Aus der gattungsgemässen EP1 524 454 A1 ist ein Kettentrieb mit einer oder mehrerer, parallel angeordneter Ketten mit einer Mehrzahl von Kettenglieder bekannt. Die Kettenglieder mit Innenlaschen und Außenlassen sind durch Niete verbunden. Es ist eine Stabilisierung der Kette zumindestens abschnittsweise vorgesehen. Zur Stabilisierung der Kette ist ein an den Laschen der Kette angreifendes Versteifungsmittel vorgesehen. Durch die Versteifungsmittel ist der Kettentrieb stabilisiert und der Kettenantrieb erhält eine hohe Laufruhe unter Verhinderung von Längenänderungen der Kette unter Last und bei Lastwechseln.

Aus der WO 02/40892 A1 ist ein Gurttrieb mit einem umlaufenden Gurt bekannt. Dieser Gurttrieb umfasst eine Vorrichtung zur Einstellung der Gurtspannung. Eine manuelle Nachstellung während des Betriebes iist nicht mehr erforderlich.

Der Erfindung liegt daher die Aufgabe zugrunde, eine Vorrichtung und ein Verfahren bereitzustellen, die eine einfache Einstellung eines Kettentriebs, insbesondere von dessen Kettenspannung ermöglichen.

Die erfindungsgemäße Lösung ist durch die Merkmale des Anspruchs 1 und des Anspruchs 9 charakterisiert. Vorteilhafte Ausgestaltungen sind in den Unteransprüchen wiedergegeben.

Bevorzugt wird demgemäß ein Verfahren zum Betreiben eines Kettentriebs, der Kettenräder aufweist, wobei Kettenzugmomente an den Kettenrädern bestimmt werden und daraus automatisiert ein Vorgabewert zum Betreiben des Kettentriebs bestimmt wird.

Insbesondere bestehen die Kettenzugmomente aus auf die Kettenräder einwirkenden Momenten, die an jedem der Kettenräder einander überlagernd ein messbares oder bestimmbares Gesamt-Moment ergeben. Diese Momente resultieren insbesondere aus einer Kettenzugkraft im Auflaufpunkt und einer Kettenzugkraft im Ablaufpunkt eines jeden der Kettenräder. Die einzelnen Kettenzugkräfte werden aus den Gesamtmomenten bestimmt. Die Gesamtmomente sind direkt oder indirekt im Bereich des Kettentriebs, insbesondere im Bereich der Kettenräder oder von deren Antrieben bestimmbar. Vorteilhaft bereitgestellt wird somit insbesondere ein Verfahren zur Kettenkraftermittlung aus dem Antriebsmoment.

Mittels der Kettenzugkräfte ist der Vorgabewert automatisiert bestimmbar, was insbesondere einer nicht manuellen Bestimmung und insbesondere einer prozessorgestützten Bestimmung des Vorgabewerts entspricht. Ein Vorgabewert ist insbesondere eine Verstellgöße zur Verstellung einer Komponente oder Funktion des Kettentriebs.

Durchführbar sind dabei analytische und rechnerische Verfahrensschritte sowohl in einem eigenständigen Prozessor, der der Anordnung mit dem Kettentrieb oder nur dem Kettentrieb selber zugeordnet ist. Ein solcher Prozessor kann als Bestandteil einer Steuereinrichtung auch ausgelegt sein zur Steuerung weiterer Funktionen des Kettentriebs und insbesondere von Antrieben des Kettentriebs.

Ein solcher Prozessor kann aber auch zentraler Bestandteil einer übergeordneten Instanz wie einer zentralen Steueranlage für eine Werkshalle sein, welche auch weitere Anlagen außer dem Kettentrieb steuert, regelt und/oder überwacht.

Vorteilhaft wird somit ein Vorgabewert bereitgestellt, der direkt auf im Kettentrieb an der Kette und den Kettenrädern wirkende Momente bezogen ist. Dies ermöglicht eine zuverlässige Einstellung von Komponenten des Kettentriebs, wie insbesondere eine Einstellung der Kettenspannung abhängig von tatsächlich wirkenden Momenten und Kräften mit einfachen Mitteln bei zugleich geringem Aufwand. Insbesondere wird durch eine so ermöglichte Automatisierung eine insbesondere bis zu einer Echtzeitregelung zeitnahe Einstellung oder Regelung der Komponenten des Kettentriebs ermöglicht.

Die Kettenräder sind dabei bevorzugt durch eine umlaufende Kette miteinander verbundene, insbesondere zueinander benachbarte Kettenräder, und/oder insbesondere Kettenräder mit jeweils mindestens einem Antrieb. Kettenrad und Kettenstern bzw. Rad und Stern sind in Verbindung mit einem Kettentrieb äquivalente Begriffe, welche lediglich sprachlich die Betonung auf die Funktion eines sich drehenden Rads bzw. auf die Funktion eines mit Zähnen versehenen Rads legen.

Eine Ausgestaltung besteht darin, dass der Vorgabewert unter Einbezug von vier Kräften bestimmt wird, wobei die vier Kräfte jeweils einer Kettenzugkraft im Auflaufpunkt und einer Kettenzugkraft im Ablaufpunkt eines jeden der Kettenräder entsprechen bzw. daraus bestimmt werden.

Somit werden die einzelnen, einander überlagert auf die Kettenräder einwirkenden Kettenzugkräfte aus den Gesamtmomenten der beiden Kettenräder bestimmt und berücksichtigt. Dies ermöglicht eine individuelle Berücksichtigung der Kraft- und Momentensituation für jedes Kettenrad bzw. für individuell jeden Antrieb, der einem der Kettenräder zugeordnet ist.

Eine Ausgestaltung besteht darin, dass ein zeitlicher oder drehwinkelabhängiger Verlauf der Kettenzugmomente analysiert wird.

Vorteilhaft werden somit die sich in einem Kettentrieb über den Drehwinkelverlauf und/oder die Zeit ändernden Kräfte und Momente berücksichtigt, die auf den Kettentrieb und insbesondere die Kettenräder einwirken. Dies kann langfristige Veränderungen und kurzfristige, insbesondere kontinuierliche periodische Änderungen der bestimmten Momente umfassen.

Zu jedem der Kettenzugmomente werden extreme Kettenradmomente bestimmt und daraus jeweils eine Kettenzugkraft im Auflaufpunkt und eine Kettenzugkraft im Ablaufpunkt eines jeden der Kettenräder bestimmt wird.

Diese Minima und Maxima entstehen insbesondere durch einen sich im Betrieb kontinuierlich ändernden wirkenden Kettenradhalbmesser, was durch eine Kettenführung am Kettenrad konstruktiv bedingt ist. Damit wird vorteilhaft der konstruktive Einfluss der Komponenten des Kettentriebs berücksichtigt und eine darauf abgestimmte Einstellung des Kettentriebs ermöglicht.

Solche extreme Kettenradmomente sind gemäß bevorzugter Ausgestaltung periodisch auftretende Minima und Maxima der Kettenradmomente. Periodisch bezieht sich dabei auf einen veränderlichen Verlauf des Drehwinkels des Kettenrads. Die zeitliche Abfolge der Maxima und Minima ist damit abhängig von einem zeitlichen Verlauf der Winkelgeschwindigkeit.

Eine Ausgestaltung besteht darin, dass als der Vorgabewert eine Kettenspannung oder ein Verstellwert zum Verstellen eines Achsabstands der Kettenräder bestimmt wird.

Die Kettenspannung ist eine wichtige Größe zum Betreiben eines Kettentriebs, so dass deren zeitnah und/oder möglichst genaue ermöglichte Berücksichtigung einsetzbar ist zur Einstellung von Komponenten des Kettentriebs. Dies ermöglicht eine erhöhte Lebensdauer, einen reduzierten Verschleiß und einen reduzierten Energieverbrauch beim Betrieb. Insbesondere sind Betriebsstörungen durch eine ungeeignete Kettenspannung vermeidbar.

Der Vorgabewert ist somit bevorzugt ein Verstellwert zum Verstellen des Achsabstands der Kettenräder, um so bei Bedarf eine verbesserte Kettenspannung und/oder Kettenvorspannung einzustellen.

Unter einem Verstellen wird auch ein Einstellen, insbesondere erstmaliges Einstellen z.B. einer Vorspannkraft verstanden.

Eine Ausgestaltung besteht darin, dass als der oder aus dem Vorgabewert automatisiert ein Vorgabewert zur Lastaufteilung auf Antriebe zum Betreiben des Kettentriebs bestimmt wird.

Eine Ausgestaltung besteht darin, dass ein solches Kettenzugmoment mittels eines Sensors, insbesondere Drehzahl- oder Kraft- oder Momentensensors bestimmt wird.

Eine Ausgestaltung besteht darin, dass der Sensor am Kettenrad, an einem Antrieb des Kettenrads oder an einem dem Kettenrad und dem Antrieb zugeordneten Getriebe angeordnet ist.

Es handelt sich somit um eine direkte bzw. unmittelbare Erfassung zumindest einer Kraft oder eines Moments. Insbesondere wird so eine Gesamt-Kraft oder ein Gesamt-Moment, die/das auf das Kettenrad wirkt, bestimmt.

Eine Ausgestaltung besteht darin, dass ein solches Kettenzugmoment indirekt bestimmt wird, insbesondere mittels einer Kenn- oder Steuergröße des Antriebs bestimmt wird.

Bei Einsatz eines Elektromotors als Antrieb kann beispielsweise der vom Antrieb verbrauchte Strom oder äquivalent dazu eine Spannung oder eine Steuergröße zur Bereitstellung des Stroms oder der Spannung als einem Moment entsprechende Größe analysiert werden, um das im Antrieb wirkende Moment zu bestimmen.

Eine weitere solche Kenngröße ist eine Drehzahl, die oder deren zeitliche Änderung auf ein am Kettenrad wirkendes Moment schließen lässt.

Gemäß einer weiteren Ausgestaltung können anstelle von Gesamt-Kettenzugmomenten auch die einzelnen am Kettenrad wirkenden Kräfte bzw. Momente direkt bestimmt werden, insbesondere einzeln die Kettenzugkraft im Auflaufpunkt und die Kettenzugkraft im Ablaufpunkt eines jeden der Kettenräder.

Auch ist demgemäß eine bevorzugte Ausgestaltung eine Anordnung mit einem Kettentrieb mit Kettenrädern und mit einer dem Kettentrieb zumindest teilweise zugeordneten Steuereinrichtung, wobei die Steuereinrichtung eingerichtet und/oder programmiert ist zum Durchführen eines solchen Verfahrens.

Die Steuereinrichtung stellt somit insbesondere den Vorgabewert zum Betreiben des Kettentriebs bereit. Die Bereitstellung kann über eine Anzeigeeinrichtung oder einen Drucker oder eine Schnittstelle zur Übertragung auf ein weiteres, insbesondere mobiles Gerät erfolgen. Damit kann dann eine Bedienungsperson eine manuelle, teilweise automatisierte oder automatische Einstellung, einschließlich einer Verstellung zumindest einer Komponente, insbesondere eine Einstellung des Achsabstands der Kettenräder veranlassen. Die Bereitstellung des Vorgabewerts kann auch derart erfolgen, dass die Steuereinrichtung oder eine weitere Steuereinrichtung bzw. ein zugeordneter Prozessor automatisch eine Einstellung einer oder mehrerer Komponenten des Kettentriebs durchführen. Die Steuereinrichtung kann auch zentral übergeordnet zur gemeinsamen Steuerung auch weiterer Vorrichtungen eingerichtet sein.

Eine Ausgestaltung besteht darin, dass der Kettentrieb Bestandteil eines Kettenkratzförderers oder einer Hobelanlage, insbesondere einer Bergbau-Hobelanlage ist.

Bereitgestellt wird somit ein Messsystem zur Erfassung des Kettensternmoments. Durch eine insbesondere hochauflösende Messung des Abtriebsmoments wird der Polygoneffekt im Messsignal erkannt. Das Momentenmesssignal wird entsprechend auf das zu erwartende Muster analysiert und damit werden insbesondere Größen bestimmt, wie Kettenkräfte im Ober- und Untertrum, eine aktuelle Kettenvorspannung, eine zur aktuellen Last ideale Vorspannung, eine ideale Lastaufteilung und eine Anpassung des Spannwegs.

Ermöglicht wird dies insbesondere durch eine Bestimmung und insbesondere Anzeige der aktuellen und der benötigten Kettenspannung, um diese entsprechend einfach anzupassen. Idealerweise erfolgt diese Anpassung automatisch durch eine geeignete Kettenspanneinrichtung.

Die erfindungsgemäße Lösung wird nachfolgend anhand von Figuren erläutert. Gleiche Bezugszeichen in unterschiedlichen Figuren verweisen auf gleiche oder gleich wirkende Komponenten oder Funktionen, so dass diesbezüglich auch die Beschreibung der weiteren Figuren heranziehbar ist. Darin ist im Einzelnen folgendes dargestellt:

Figur 1      zeigt in schematisiert vereinfachter Darstellung den Grundaufbau eines Kettentriebs;

Figur 2      zeigt beispielhafte Verläufe von Komponenten eines Kettenradmoments;

Figur 3      zeigt beispielhafte Verläufe von Komponenten eines dynamischen Kettenradhalbmessers;

Figur 4      zeigt ein Kettenrad in einer weiteren Betriebsstellung; und

Figur 5      zeigt beispielhafte Verläufe von Komponenten eines dynamischen Kettenradhalbmessers einer Flachkette.

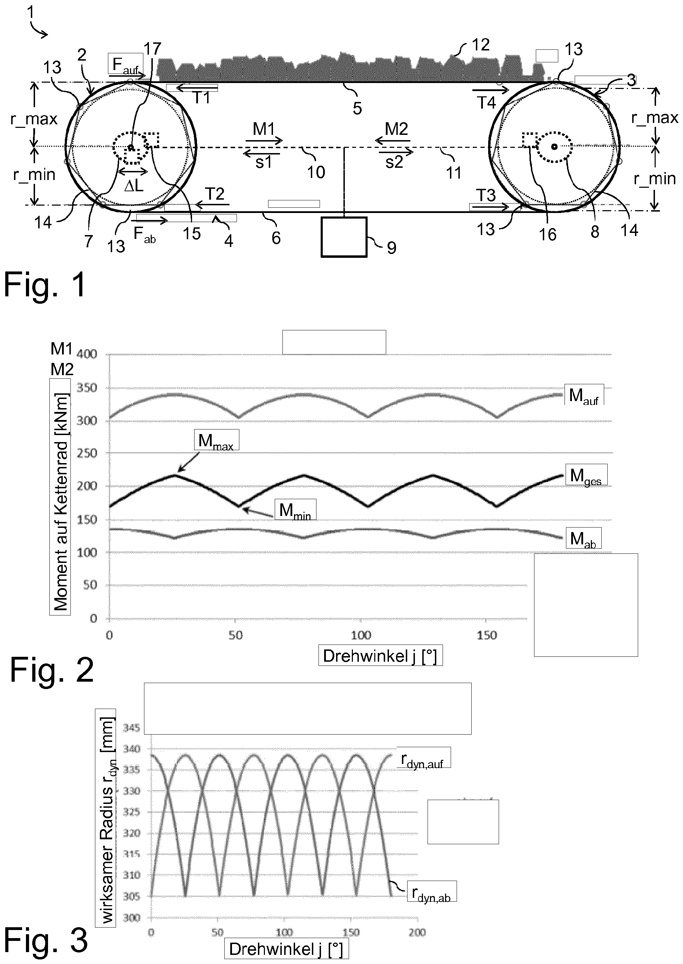

Figur 1 zeigt beispielhaft einen als Kettenförderer ausgestalteten Kettentrieb 1 mit zwei Kettenrädern 2, 3 und einem davon angetriebenen Transportband 4 mit einem Obertrum 5 und einem Untertrum 6. Ein Antrieb 7 ist als Hauptantrieb an dem linksseitig skizzierten Kettenrad 2 angeordnet, um dieses anzutreiben. Ein weiterer Antrieb 8 ist als Hilfsantrieb an dem anderen Kettenrad 3 angeordnet, um dieses anzutreiben.

Eine Steuereinrichtung 9 dient zum Ansteuern der Antriebe 7, 8. Beispielhaft ist die Steuereinrichtung 9 über Leitungen 10, 11 mit den Antrieben 7, 8 verbunden, wobei auch andere Übertragungssysteme insbesondere für Mess- und Steuersignale einsetzbar sind. Insbesondere sind von der Steuereinrichtung 9 zu den Antrieben 7, 8 Steuersignale s1, s2 zum Ansteuern der Antriebe 7, 8 übertragbar. Das mittels der Antriebe 7, 8 antreibbare Transportband 4 dient zum Transportieren eines Förderungsguts 12, beispielsweise Kohleklein.

Durch eine räumliche Erstreckung von in sich starren Kettengliedern, die mit den Kettenrädern 2, 3 bzw. einer Zahnung der Kettenräder 2, 3 in Eingriff treten, ändert sich während der Drehung der Kettenräder 2, 3 ein effektiver Kettenradhalbmesser bzw. Kettensternhalbmesser zwischen einer Achse des jeweiligen Kettenrads und dessen Außenumfang. Skizziert ist dies durch ein Polygon als jeweiligem Kettenrad 2, 3 mit jeweils einem Außenkreis 13 und einem Innenkreis 14, die einen Verstellbereich des Kettenradhalbmessers skizzieren. Für eine Kettenspannung des Kettentriebs 1 resultieren maximale und minimale Extremwerte eines jeweils am Kettenrad 2, 3 wirkenden Kettenradmoments $M_{max}$, $M_{min}$ aus einem sich dadurch ergebenden maximalen Kettenradhalbmesser r_max und einem sich dadurch ergebenden minimalen Kettenradhalbmessers r_min.

Die extremen Werte der Kettenradmomente $M_{max}$, $M_{min}$ resultieren jeweils aus einer Kettenzugkraft $F_{auf}$ am Kettenrad 2 bzw. 3 im Auflaufpunkt und einer Kettenzugkraft $F_{ab}$ am Kettenrad 2 bzw. 3 im Ablaufpunkt.

Eine weitere oder diese Steuereinrichtung 9 ist ausgelegt, eine Kettenspannung abhängig von an den Kettenrädern 2, 3 jeweils erfassten Kettenstern- bzw. Kettenradmomenten M1 bzw. M2 bereitzustellen. Zum Erfassen dieser Gesamt-Kettenradmomente M1, M2 weist die Anordnung Momentensensoren 15 bzw. 16 auf, welche beispielsweise eine jeweilige Leistung an den zugeordneten Antrieben 7, 8 erfassen.

Zum Bestimmen eines Vorgabewerts ∆L, insbesondere Verstellwerts, der eine erforderliche Änderung eines Achsabstands zwischen Achsen der Kettenräder 2, 3 angibt, werden die jeweils zwei an den Kettenrädern 2, 3 wirkenden Kettenkräfte T1, T2, T3, T4 verwendet, die sich aus den jeweiligen Kettenzugkräften $F_{auf}$, $F_{ab}$ an den Kettenrädern 2 bzw. 3 ergeben. Diese sind insbesondere aus den Kettenradmomenten M1 bzw. M2 bestimmbar.

Der Vorgabewert ∆L ist von der Steuereinrichtung 9 beispielsweise über eine Anzeigeeinrichtung an eine Betriebsperson ausgebbar, so dass diese damit den Achsabstand manuell, automatisiert oder teilweise automatisiert anpasst. Optional ist eine Spannvorrichtung 17 an einem oder beiden der Kettenräder 2, 3 angeordnet, welche mittels der Steuereinrichtung 9 eine Änderung der Kettenspannung automatisiert ermöglicht.

Zur Verfahrensdurchführung wird entsprechend ein Polygoneffekt berücksichtigt, der auf einer Abweichung eines Kettenrads 2, 3 bzw. Kettensterns von einem idealen Kreis beruht. Abhängig von der Anzahl von Zähnen ergibt sich eine periodische Änderung eines dynamischen Kettensternhalbmessers davon.

Die meisten Kettenräder insbesondere von Kettenkratzförderern oder Streckenförderern haben eine ungeradzahlige Anzahl an Zähnen. Bei einem Kettenrad mit z.B. 7 Zähnen ändert sich ein wirksamer Kettenradradius periodisch um ca. -10 %. Steht die Kette auch hinter dem Kettenrad unter Spannung, so wirkt der Polygoneffekt sowohl im Auflauf- wie auch im Ablaufpunkt. Bei Kettenrädern mit ungeradzahliger Zähnezahl ist der Effekt im Ablaufpunkt gegenüber dem Auflaufpunkt um einen halben Zahnwinkel verschoben. Bei konstanten Kettenkräften führt der Polygoneffekt somit zu einem typischen Muster im Kettenradmoment.

Figur 2 zeigt wirkende Momente eines Kettenrads bzw. Kettensterns über dessen Drehwinkelbereich. Beispielhaft angenommen sind dabei konstante Kettenzugkräfte im Obertrum und Untertrum mit $F_{auf}$ = 1000 kN bzw. $F_{ab}$ = 400 kN und eine periodische Änderung der zugehörigen dynamischen Kettensternhalbmesser gemäß Figur 3. Ein Gesamtmoment $M_{ges}$ setzt sich zusammen aus den überlagerten Kettenzugkräften, d.h. dem Moment $M_{auf}$ der Kettenzugkraft $F_{auf}$ am Kettenrad im Auflaufpunkt und dem Moment $M_{ab}$ der Kettenzugkraft $F_{ab}$ am Kettenrad im Ablaufpunkt. Das Gesamtmoment $M_{ges}$ wirkt auf das Kettenrad mit einem insbesondere zick-zack-ähnlichem Verlauf mit leichten Bogenverläufen bzw. dynamischen Radien zwischen Minima des Kettenradmoments $M_{min}$ und Maxima des Kettenradmoments $M_{max}$.

Das Gesamtmoment $M_{ges}$ wird z.B. mit dem Momentensensor 15 bzw. 16 gemessen. Das Gesamtmoment ergibt sich aus

$$M_{ges} = F_{auf} \cdot r_{dyn,auf} - F_{ab} \cdot r_{dyn,ab}.$$

Die dynamischen bzw. wirksamen Radien $r_{dyn,auf}$, $r_{dyn,ab}$ sind abhängig vom Kettenraddurchmesser bzw. Kettensterndurchmesser und dem aktuellen Drehwinkel, liegen also geometrisch fest. Figur 3 skizziert beispielhaft Verläufe eines wirksamen Kettenradhalbmessers- bzw. Radius $r_{dyn}$ mit vom Drehwinkel j des Kettenrads abhängigen Verlauf. Wirksam sind dabei wieder ein wirksamer Radius $r_{dyn,auf}$, $r_{dyn,ab}$ im Auflauf- und Ablaufpunkt.

Durch eine Analyse des qualitativen Verlaufs des Gesamtmoments $M_{ges}$ im Bereich der Spitzen lassen sich die Kettenzugkraft $F_{auf}$ im Auflaufpunkt und die Kettenzugkraft $F_{ab}$ im Ablaufpunkt als Trumkräfte berechnen.

Eine Bestimmung der Trumkräfte ist beispielhaft durchführbar, indem die Extremwerte des Kettenradmoments $M_{max}$ und $M_{min}$ analysiert werden. Der Nullpunkt des Drehwinkels j des Kettenrads wird so gewählt, dass hierbei der maximale Kettenradhalbmesser r_max für die auflaufende Kette 5 vorliegt. Dann ergibt sich der maximale Kettenradhalbmesser r_max für die auflaufende Kette 5 immer genau dann, wenn der Teilungsrest von j/tw<w·dt ist, wobei tw ein Zahnteilungswinkel mit tw = 360°/zn, zn eine Zähnezahl des Kettenrads, dt ein Zeitinkrement zwischen zwei Messwerten und w die Winkelgeschwindigkeit des Kettenrads ist. Zur Veranschaulichung vereinfachend vorausgesetzt, dass auf- und ablaufende Kette 5, 6 parallel sind, d.h. ein Winkel zwischen den Kettenzugkräften $F_{auf}$ und $F_{ab}$ = 180° besteht, dann wirkt für die ablaufende Kette zu diesem Zeitpunkt ein minimaler Kettenradhalbmesser r_min und das resultierende

Kettenradmoment wird maximal $M_{max}$, wie anhand des in Figur 1 links skizzierten Kettenrads veranschaulicht ist.

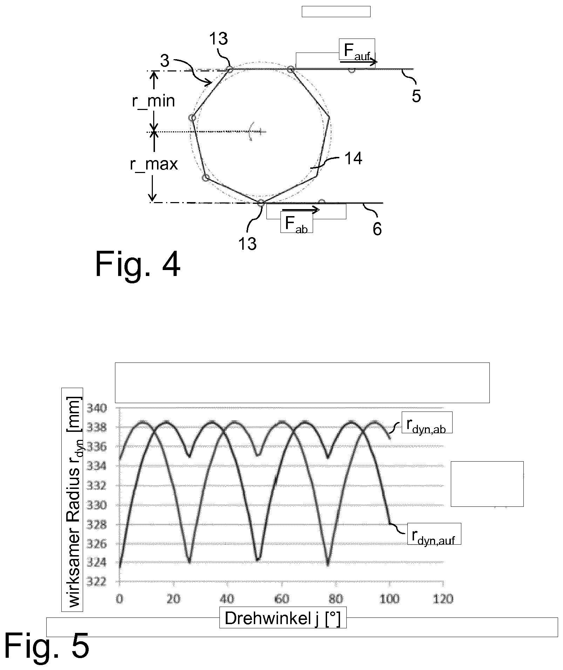

Figur 4 zeigt, dass das Kettenradmoment minimal $M_{min}$ wird, wenn der Kettenradhalbmesser für die auflaufende Kette 5 minimal und für die ablaufende Kette 6 maximal wird. Dies ist genau dann der Fall, wenn der Teilungsrest von $(j + tw / 2) / tw < w \cdot dt$ ist.

Für die extremen Kettenradmomente $M_{max}$ und $M_{min}$ gilt zu deren Berechnung:

$$M_{max} = F_{auf} \cdot r\_max – F_{ab} \cdot r\_min, \qquad (I)$$

$$M_{min} = F_{auf} \cdot r\_min - F_{ab} \cdot r\_max. \qquad (II)$$

Beispielhaft veranschaulichend wird davon ausgegangen, dass sich die Kettenzugkräfte $F_{auf}$ und $F_{ab}$ während eines Zahneingriffs, d.h. einer Drehung des Kettenrads um den Zahnteilungswinkel tw, nicht nennenswert ändern. Dann handelt es sich bei (I) und (II) um zwei Gleichungen mit den zwei Unbekannten $F_{auf}$ und $F_{ab}$, die sich nach $F_{auf}$ und $F_{ab}$ auflösen lassen, z.B. indem (I) nach $F_{auf}$ aufgelöst und $F_{auf}$ in (II) eingesetzt wird. Daraus folgt:

$$F_{ab} = max(0.0, (M_{min} - M_{max} \cdot rk) / B),$$

$$F_{auf} = (M_{max} / r\_max) + rk \cdot F_{ab}$$

$$mit\ rk = r\_min/r\_max\ und\ B = (r\_min^2 / r\_max) - r\_max.$$

Eine Messung wird somit so durchgeführt, dass zu jedem Zahneingriffsintervall das örtliche Maximum und Minimum des Kettenradmoments $M_{max}$ bzw. $M_{min}$ bestimmt wird und daraus nach den Formeln die jeweils zwei Kettenkräfte $F_{auf}$ und $F_{ab}$ berechnet werden.

Ermöglicht wird damit eine Auswertung der Kettenkräfte bezüglich Kettenvorspannung und Leistungsaufteilung. Sind alle Kettenkräfte an den beiden Antrieben bekannt, d.h. am Hauptantrieb 7 mit den Trumkräften bzw. Kettenzugkräften $T1 := F_{auf}$ und $T2 := F_{ab}$ und am Hilfsantrieb 8 mit den Kettenzugkräften $T3 := F_{auf}$ und $T4 := F_{ab}$, so lässt sich die aktuelle Kettenvorspannung $T_{0,ist}$ berechnen:

$$T_{0,ist} = (T1+T2+T3+T4)/4.$$

Der Zugkraftbedarf $T_{erf,OT}$ des Obertrums beträgt

$$T_{erf,OT} = T1 – T4$$

und der Zugkraftbedarf $T_{erf,UT}$ des Untertrums beträgt

$$T_{erf,UT} = T3 – T2.$$

Eine ideale Kettenvorspannung $T_{0,soll}$ noch ohne Reserve gegen dynamische Lastspitzen beträgt für die aktuelle Situation

$$T_{0,soll} = (T_{erf,OT} + T_{erf,UT})/4.$$

Für eine Kettensteifigkeit gilt

$$c_{Kette} = E \cdot A / (2 \cdot Achsabstand)$$

mit E als E-Modul der Kette von z.B. ca. 50 kN/mm² und A als Querschnitt in mm² eines Abschnitts des Kettenglieds. Aus der Kettensteifigkeit $c_{Kette}$ von beispielsweise $c_{Kette}$ = 361,6 kN/m ergibt sich der Vorgabewert zur Änderung des Achsabstands der Kettenräder 2, 3 gemäß:

$$\Delta L = (T_{0,soll} - T_{0,ist}) / c_{Kette}.$$

Optional können weitere Aspekte insbesondere bei einer Ansteuerung der Antriebe 7, 8 und/oder des Vorgabewerts $\Delta L$ berücksichtigt werden.

Ermöglicht wird beispielsweise auch eine kombinierte Einstellung von Kettenvorspannung, Leistungsaufteilung und Überlastabsicherung mit der nachfolgenden Verfahrensweise.

In einem ersten Schritt zieht der Hilfsantrieb den Leistungsbedarf des Untertrums plus eine Vorspannkraft, die eine Differenz zwischen aktueller Umfangskraft und maximaler Umfangskraft gemäß Überlastabsicherung abdeckt. Im nachfolgenden Schritt zieht der Hauptantrieb den Leistungsbedarf des Obertrums abzüglich des vom Hilfsantrieb über die Vorspannung aufgebrachten Anteils. Daraufhin wird die Kettenvorspannung so eingestellt, dass die Kraft hinter dem Hilfsantrieb gerade Null wird. Dann wird die Überlastsicherung auf die Position des Kettentriebs, z. B. einer Schrämmaschine und den aktuellen Leistungsbedarf abgestimmt. Sobald der Leistungsbedarf des Hauptantriebs die Nennleistung erreicht, werden weitere Steigerungen vom Hilfsantrieb aufgebracht. Haben beide Antriebe ihre Nennleistung erreicht, wird ein weiterer Anstieg gleichmäßig auf beide Antriebe verteilt. Sinkt der Leistungsbedarf wieder, wird diese Logik rückwärts durchlaufen, d.h. gleichmäßige Entlastung beider Antriebe bis zur Nennleistung, danach Entlastung des Hilfsantriebs bis zum Sollwert des ersten Schritts.

Vorteilhaft ist eine mögliche Reduzierung der Kettenkraft und damit die Schonung der Anlage und Verringerung des Leistungsbedarfs umso größer, je kleiner der aktuelle Leistungsbedarf bezogen auf die installierte Leistung ist.

Da zu hohe Kettenkräfte aufgrund unvermeidlicher Ausrichtfehler und daraus resultierender Zwangskräfte in der Kettenführung einen höheren Zugkraftbedarf produzieren, wird der Zugkraftbedarf $T_{erf,OT}$ und $T_{erf,UT}$ in der Praxis niedriger ausfallen als errechnet. Optional kann daher entsprechend weiter nachgeregelt werden und eine erzielte Reduktion des Leistungsbedarfs - und damit einhergehend des Verschleißes - optional auch ausgewiesen werden.

Die Kettenzugkräfte sind in der Praxis stark schwankend. Entsprechend wird das Signal der Kettenradmomente M1, M2 stark verrauscht sein. Da bekannt ist, wo und wonach in dem Signal der Messwerte zu suchen ist und die Auswertung nicht zeitkritisch ist, sind die erforderlichen Informationen aus der Momentenmessung generierbar. Insbesondere kann das Signal gefiltert und/oder geglättet werden. Beispielsweise kann eine Zahneingriffsfrequenz gesucht bzw. beobachtet und analysiert werden und dazu ggfs. ein relevanter Frequenzbereich gefiltert werden.

Die Messung des Drehwinkels des Kettenrads ist nicht unbedingt notwendig. Es genügt, die lokalen Maxima und Minima des Kettenradmoments auf den Zeitintervallen zu bestimmen. Ist jedoch der Drehwinkel j bekannt, so kann z.B. aus der Verschiebung der Maxima/Minima gegenüber der erwarteten Lage auf Störungen des Systems, insbesondere Verschleiß an Kettenrad und Kette geschlossen werden. So lässt sich ein Verschleiß des Kettensterns z.B. aus der Momentenmessung ableiten, so dass berücksichtigbar ist, um welchen Betrag sich dadurch der wirksame Kettensternhalbmesser bzw. Kettensternradius und die Phasenlage des Polygoneffekts verschiebt.

Die Bestimmung oder Messung des Moments, insbesondere Kettenradmoments M1, M2 und des Drehwinkels am Kettenrad kann prinzipiell an verschiedenen Stellen im Antriebsstrang erfolgen. Das Kettenradmoment kann auch an einer anderen Stelle als direkt am Kettenrad gemessen werden. Die Messung kann z.B. auch bei Verwendung einer hydrodynamischen Kupplung an der Abtriebseite der Kupplung, insbesondere dem am Turbinenrad dieser Kupplung oder am Getriebeeingang erfolgen und auf das Kettenrad umgerechnet werden. Realisierbar ist dazu eine Momentenmessung am Getriebeausgang/Stern, die an dieser Stelle ein besonders gutes Signal liefert. Insbesondere ist die erforderliche Momentenmessung in eine Turbokupplung integrierbar, was zu einem erheblichen Funktionalitätsgewinn führt. Bei Verwendung hydrodynamischen Kupplung zwischen Motor und Getriebeeingang macht sich die durch den Polygoneffekt am Kettenstern verursachte Momentenschwankung am Getriebeeingang als eine Kombination von Momenten- und Drehzahlschwankungen bemerkbar. Soll die Kettenkraftermittlung also in der hydrodynamischen Kupplung oder am Getriebeeingang erfolgen, so kann dies durch entsprechend genaue Messung von Moment und Drehzahl realisiert werden.

Auch umsetzbar ist als Beispiel für eine indirekte Momentenmessung eine Momentenbestimmung mittels Elektromotor/Frequenzumrichter mit beispielsweise einer Strommessung, welche vorteilhaft keinen zusätzlichen Sensor erforderlich macht und bevorzugt in Verbindung mit einer möglichst starren Motor/Getriebe-Kopplung realisiert wird. Hierzu wird eine drehelastische Verbindung zwischen Motor und Kettenrad bevorzugt und insbesondere keine Turbokupplung verwendet. Damit kann das Verfahren auch für Frequenzumrichter-Antriebe genutzt werden. Ausnutzbar ist somit auch, dass die Kettenkraft bzw. Kettenspannkraft mittelbar mittels eines Frequenzumrichters beeinflussbar ist. Insbesondere ist ein Einsatz möglich in Verbindung mit Antrieben mit hydraulischer Kupplung.

Ermöglicht wird die Eckzugkräfte, d.h. die Kettenzugkraft vor und hinter Haupt- und Hilfsantrieb laufend zu ermitteln und daraus Steuerungsgrößen zu generieren. Dies erfolgt insbesondere durch eine hinreichend genaue Erfassung des Antriebsmoments mit entsprechender Signalaufbereitung. Steuerungsgrößen sind insbesondere der Vorgabewert ΔL als Vorgabe einer Spannwegänderung der Kettenspanneinrichtung für optimale Kettenvorspannung, ein Sollmoment für den Hauptantrieb, ein Sollmoment für den Hilfsantrieb, eine Momentenbegrenzung für den Hauptantrieb und/oder eine Momentenbegrenzung für den Hilfsantrieb.

Berücksichtigbar ist optional auch, wie groß dynamischen Lastspitzen werden können, für die eine Sicherheits-Vorspannung vorgehalten wird. Lastspitzen resultieren z.B. bei Hobelanlagen aus Schwankungen von Schneidkräften, bei Strebförderern aus schlagartig ansteigender Beladung aus Nachfall oder aus Materialstau vor einem Portal einer Schrämmaschine. Eine bevorzugte Auslegung eines Kettenspannsystems beinhaltet also auch eine passende Lastbegrenzung im Antriebsstrang.

Ist eine Kettenführung im Bereich des Kettenrades so ausgeführt, dass der Winkel zwischen auf- und ablaufender Kette von 180° abweicht, so weicht die Phasenverschiebung zwischen Maxima und Minima entsprechend von tw/2 ab. Die angegebenen Gleichungen werden dann entsprechend angepasst.

Wird eine Kette verwendet, bei der die stehenden Kettenglieder eine andere Teilung als die liegenden Glieder besitzen, wie dies z.B. bei einer Flachkette der Fall und in Figur 5 skizziert ist, so wird dies bei der Berechnung der maximalen und minimalen Radien berücksichtigt.

Da die Kettenkräfte während eines Eingriffs nicht konstant sind, schwanken die berechneten Kettenkräfte, wie Figur 5 entnehmbar ist. Dies ist z.B. durch eine gleitende Mittelwertbildung abschwächbar. Die Genauigkeit kann auch dadurch erhöht werden, dass zusätzlich zu dem Wertepaar der extremen Kettenradmomente $M_{max}$ und $M_{min}$ das nächste Maximum des Kettenradmoments $M_{max2}$ erfasst wird und aus dem Wertepaar $M_{min}$ und $M_{max2}$ die Kräfte $F_{auf2}$ und $F_{ab2}$ bestimmt werden, indem Gleichung (II) nach $F_{auf2}$ aufgelöst und in Gleichung (I) eingesetzt wird:

$$F_{ab2} = \max(0.0, (M_{max} - M_{min}*rg) / B2)$$

$$F_{auf2} = (M_{min} / r\_min) + rg*F_{ab2}$$

mit rg = r_max/r_min und B2 = (r_max$^2$ / r_min) - r_min. Aus $F_{ab}$ und $F_{ab2}$ sowie $F_{auf}$ und $F_{auf2}$ wird dann der Mittelwert gebildet.

Weitere Modifikationen und Erweiterungen sind realisierbar. Anstelle des beispielhaften Kettenförderers aus dem Kohlebergbau ist eine Umsetzung auch in anderen Branchen, technischen Gebieten und auch bei anderen Ausgestaltungen mit Kettentrieben realisierbar. Alle Zahlenwerte und Dimensionsangaben sind rein beispielhaft angegeben.

**Bezugszeichenliste:**

1 Kettentrieb, insbesondere Kettenförderer
2,3 Kettenräder
4 Transportband
5 Obertrum
6 Untertrum
7, 8 Antriebe
9 Steuereinrichtung
10, 11 Leitungen
12 Förderungsgut
13 Außenkreis
14 Innenkreis
15, 16 Momentensensoren
17 Spannvorrichtung
$F_{auf}$ Kettenzugkraft im Auflaufpunkt
$F_{ab}$ Kettenzugkraft im Ablaufpunkt
j Drehwinkel des Kettenrads
M1, M2 Kettenradmomente
$M_{auf}$ Moment der Kettenzugkraft $F_{auf}$ im Auflaufpunkt

$M_{ab}$ Moment der Kettenzugkraft $F_{ab}$ im Ablaufpunkt
$M_{max}$, $M_{min}$ extreme Kettenradmomente
$r_{dyn}$ wirksamer Radius
$r_{dyn,auf}$, $r_{dyn,ab}$ wirksamer Radius im Auflauf- bzw. Ablaufpunkt
r_max maximaler Kettenradhalbmesser
r_min minimaler Kettenradhalbmessers.
s1, s2 Steuersignale
T1, T2, T3, T4 wirkende Kettenkräfte als Trumkräfte
$\Delta L$ Verstellwert oder Vorgabewert für Achsabstand

**Patentansprüche**

1. Verfahren zum Betreiben eines Kettentriebs (1), der Kettenräder (2, 3) aufweist,
   wobei Kettenzugmomente (M1, M2) an den Kettenrädern (2, 3) bestimmt werden
   **dadurch gekennzeichnet,**
   **dass** zu jedem der Kettenzugmomente (M1, M2) extreme Kettenradmomente (Mmax, Mmin) bestimmt werden und daraus jeweils eine Kettenzugkraft (Fauf) im Auflaufpunkt und eine Kettenzugkraft (Fab) im Ablaufpunkt eines jeden der Kettenräder (2, 3) bestimmt wird und daraus automatisiert ein Vorgabewert ($\Delta L$) zum Betreiben des Kettentriebs (1) bestimmt wird.

2. Verfahren nach Anspruch 1,
   **dadurch gekennzeichnet,**
   **dass** der Vorgabewert ($\Delta L$) unter Einbezug von vier Kräften bestimmt wird, wobei die vier Kräfte jeweils einer Kettenzugkraft (Fauf) im Auflaufpunkt und einer Kettenzugkraft (Fab) im Ablaufpunkt eines jeden der Kettenräder (2, 3) entsprechen.

3. Verfahren nach Anspruch 1 oder 2,
   **dadurch gekennzeichnet,**
   **dass** ein zeitlicher oder drehwinkelabhängiger Verlauf der Kettenzugmomente (M1, M2) analysiert wird.

4. Verfahren nach einem vorstehenden Anspruch,
   **dadurch gekennzeichnet,**
   **dass** als der Vorgabewert ($\Delta L$) eine Kettenspannung oder ein Verstellwert zum Verstellen eines Achsabstands der Kettenräder (2, 3) bestimmt wird.

5. Verfahren nach einem vorstehenden Anspruch,
   **dadurch gekennzeichnet,**
   **dass** als der oder aus dem Vorgabewert ($\Delta L$) automatisiert ein Vorgabewert zur Lastaufteilung auf Antriebe (7, 8) zum Betreiben des Kettentriebs (1) bestimmt wird.

6. Verfahren nach einem vorstehenden Anspruch,
   **dadurch gekennzeichnet,**
   **dass** ein solches Kettenzugmoment (M1, M2) mittels eines Sensors, insbesondere Drehzahlsensors und/oder Kraft- und/oder Momentensensors (15, 16) bestimmt wird.

7. Verfahren nach Anspruch 6,
   **dadurch gekennzeichnet,**
   **dass** der Sensor am Kettenrad (2, 3), an einem Antrieb (7, 8) des Kettenrads (2, 3) oder an einem dem Kettenrad (2, 3) und dem Antrieb (7, 8) zugeordneten Getriebe angeordnet ist.

8. Verfahren nach einem vorstehenden Anspruch,
   **dadurch gekennzeichnet,**
   **dass** ein solches Kettenzugmoment (M1, M2) indirekt bestimmt wird, insbesondere mittels einer Kenn- oder Steuergröße des Antriebs (7, 8) bestimmt wird.

9. Anordnung mit einem Kettentrieb mit Kettenrädern (2, 3) und mit einer dem Kettentrieb (1) zumindest teilweise zugeordneten Steuereinrichtung (9),

**dadurch gekennzeichnet,**

**dass** die Steuereinrichtung (9) eingerichtet und/oder programmiert ist zum Durchführen eines Verfahrens nach einem vorstehenden Anspruch.

10. Anordnung nach Anspruch 9,
**dadurch gekennzeichnet,**
**dass** der Kettentrieb (1) Bestandteil eines Kettenkratzförderers oder einer Hobelanlage, insbesondere Bergbau-Hobelanlage, ist.

**Claims**

1. Method for operating a chain drive (1) which has chain wheels (2, 3),
wherein chain pulling torques (M1, M2) are determined at the chain wheels (2, 3), **characterized**
**in that** extreme chain wheel torques (Mmax, Mmin) are determined at each of the chain pulling torques (M1, M2), and in each case a chain pulling force (Fauf) at the run-on point and a chain pulling force (Fab) at the run-off point of each of the chain wheels (2, 3) is respectively determined therefrom and a prescription value (ΔL) for operating the chain drive (1) is determined therefrom in an alternated fashion.

2. Method according to Claim 1,
**characterized**
**in that** the prescription value (ΔL) is determined with the inclusion of four forces, wherein the four forces each correspond to a chain pulling force (Fauf) at the run-on point and a chain pulling force (Fab) at the run-off point in each of the chain wheels (2, 3).

3. Method according to Claim 1 or 2,
**characterized**
**in that** a chronological or rotational-angle-dependent profile of the chain pulling torques (M1, M2) is analyzed.

4. Method according to a preceding claim,
**characterized**
**in that** a chain tension or an adjustment value for adjusting a centre distance of the chain wheels (2, 3) is determined as the prescription value (ΔL) .

5. Method according to a preceding claim,
**characterized**
**in that** a prescription value for apportioning the load between drives (7, 8) for operating the chain drive (1) is determined as the prescription value (ΔL) or from the prescription value (ΔL).

6. Method according to a preceding claim,

**characterized**
**in that** such a chain pulling torque (M1, M2) is determined by means of a sensor, in particular rotational speed sensor and/or force sensor and/or torque sensor (15, 16).

7. Method according to Claim 6,
**characterized**
**in that** the sensor is arranged on the chain wheel (2, 3), on a drive (7, 8) of the chain wheel (2, 3) or on a transmission assigned to the chain wheel (2, 3) and the drive (7, 8).

8. Method according to a preceding claim,
**characterized**
**in that** such a chain pulling torque (M1, M2) is determined indirectly, in particular by means of a characteristic variable or control variable of the drive (7, 8).

9. Arrangement having a chain drive with chain wheels (2, 3) and having a control device (9) which is at least partially assigned to the chain drive (1),
**characterized**

**in that** the control device (9) is configured and/or programmed to carry out a method according to a preceding claim.

10. Arrangement according to Claim 9,
**characterized**
**in that** the chain drive (1) is a component of a sprocket wheel conveyor or of a plough system, in particular mining plough system.

**Revendications**

1. Procédé, destiné à faire fonctionner une transmission par chaîne (1), qui comporte des pignons (2, 3), des couples de traction sur la chaîne (M1, M2) étant déterminés sur les pignons (2, 3), **caractérisé en ce que** pour chacun des couples de traction sur la chaîne (M1, M2) sont déterminés des couples de pignons extrêmes (Mmax, Mmin) et à partir de ces derniers, est déterminée une force de traction sur la chaîne (Fauf) sur le point d'accroche et une force de traction sur la chaîne (Fab) sur le point de relâche de chacun des pignons (2, 3) et à partir de celles-ci, est déterminée de manière automatisée une valeur prescrite (ΔL) pour le fonctionnement de la transmission par chaîne (1).

2. Procédé selon la revendication 1, **caractérisé en ce que** la valeur prescrite (ΔL) est déterminée en incluant quatre forces, les quatre forces correspondant respectivement à une force de traction sur la chaîne (Fauf) sur le point d'accroche et à une force de traction sur la chaîne (Fab) sur le point de relâche de chacun des pignons (2, 3).

3. Procédé selon la revendication 1 ou 2, **caractérisé en ce qu'**une courbe temporelle ou dépendant d'un angle de rotation des couples de traction sur la chaîne (M1, M2) est analysée.

4. Procédé selon l'une quelconque des revendications précédentes, **caractérisé en ce qu'**en tant que valeur prescrite (ΔL) est déterminée une tension de la chaîne ou une valeur d'ajustage pour ajuster un entraxe des pignons (2, 3).

5. Procédé selon l'une quelconque des revendications précédentes, **caractérisé en ce qu'**en tant que ou à partir de la valeur prescrite (ΔL) est déterminée automatiquement une valeur prescrite pour la répartition de la charge sur des entraînements (7, 8) destinés à faire fonctionner la transmission par chaîne (1).

6. Procédé selon l'une quelconque des revendications précédentes, **caractérisé en ce qu'**un tel couple de traction sur la chaîne (M1, M2) est déterminé à l'aide d'un capteur, notamment d'un capteur de vitesse et/ou d'un capteur de force et/ou d'un capteur de couple (15, 16).

7. Procédé selon la revendication 6, **caractérisé en ce que** le capteur est placé sur le pignon (2, 3), sur un entraînement (7, 8) du pignon (2, 3) ou sur une transmission associée au pignon (2, 3) et à l'entraînement (7, 8).

8. Procédé selon l'une quelconque des revendications précédentes, **caractérisé en ce qu'**un tel couple de traction sur la chaîne (M1, M2) est déterminé indirectement, notamment à l'aide d'une grandeur caractéristique ou d'une grandeur de commande de l'entraînement (7, 8).

9. Agencement, pourvu d'une transmission par chaîne dotée de pignons (2, 3) et d'un système de commande (9) au moins partiellement associé à la transmission par chaîne (1), **caractérisé en ce que** le système de commande (9) est aménagé et/ou programmé pour réaliser un procédé selon l'une quelconque des revendications précédentes.

10. Agencement selon la revendication 9, **caractérisé en ce que** la transmission par chaîne (1) est une partie d'un transporteur à raclettes ou d'une abatteuse, notamment d'une abatteuse dans l'industrie minière.

Fig. 1

Fig. 2

Fig. 3

## Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1524454 A1
- WO 0240892 A1